Europäisches Patentamt

European Patent Office

Office européen des brevets

(11) Veröffentlichungsnummer: **0 618 425 A1**

# (12) EUROPÄISCHE PATENTANMELDUNG

(21) Anmeldenummer: **94104815.9**

(22) Anmeldetag: **26.03.94**

(51) Int. Cl.5: **G01B 1/00**, G01B 7/34,
G01N 27/00

(30) Priorität: **30.03.93 DE 4310349**

(43) Veröffentlichungstag der Anmeldung:
**05.10.94 Patentblatt 94/40**

(84) Benannte Vertragsstaaten:
**CH DE FR LI NL**

(71) Anmelder: **IMM INSTITUT FÜR MIKROTECHNIK GmbH**
**Carl-Zeiss-Strasse 18-20**
**D-55129 Mainz-Hechtsheim (DE)**

(72) Erfinder: **Ruf, Alexander**
**Holunderweg 33**
**D-55128 Mainz (DE)**
Erfinder: **Abraham, Michael, Dr.**
**Am Kühlborn 5**
**D-55129 Mainz (DE)**
Erfinder: **Lacher, Manfred**
**Kästrich 53**
**D-55116 Mainz (DE)**
Erfinder: **Zetterer, Thomas, Dr.**
**Chambolle-Musigny-Strasse 2**
**D-55546 Schwabenheim (DE)**
Erfinder: **Dietrich, Thomas R., Dr.**
**Flurscheideweg 1A**
**D-65936 Frankfurt (DE)**

(74) Vertreter: **Dr. Fuchs, Dr. Luderschmidt Dr.**
**Mehler, Dipl.-Ing. Weiss Patentanwälte**
**Abraham-Lincoln-Strasse 7**
**D-65189 Wiesbaden (DE)**

(54) **Sensorkopf und Verfahren zu seiner Herstellung.**

(57) Es wird ein Sensorkopf (1) beschrieben, der zwischen einem Trägerelement (2) und dem Federbalken (7), der am freien Ende ggf. eine Sensorspitze (9) trägt, einen Abstandshalter (5b) aufweist, der den Abstand d zwischen Federbalken (7) und Trägerelement (2) definiert. Der Abstandshalter (5b) kann aus einer Opferschicht (5a) bestehen, die nach Ausbildung eines entsprechenden Schichtensystems zwischen Federbalken (7) und Trägerelement (2) bis auf den Abstandshalter (5b) herausgeätzt wird. Das Trägerelement (2) und der Federbalken (7) sind jeweils mit einer Spiegelschicht (4 und 6) versehen. Gemäß einer anderen Ausführungsform können auch plasmonaktive Schichten vorgesehen sein.

Fig. 2

Rank Xerox (UK) Business Services
(3. 10/3.0 9/3.3.4)

Die Erfindung betrifft einen Sensorkopf gemäß des Oberbegriffes des Patentanspruchs 1. Die Erfindung bezieht sich auch auf ein Verfahren zur Herstellung solcher Sensorköpfe und auf ein Verfahren zum Messen der Auslenkung des Federbalkens.

Derartige Sensorköpfe werden u.a. in der Rasterkraftmikroskopie (AFM) eingesetzt, die eine sehr empfindliche Art der Oberflächenprofilometrie ist. Die zentrale Komponente eines Kraftmikroskops ist der Sensorkopf, der aus einem Trägerelement, einem Federbalken und einer Sensorspitze besteht, die über die Probenoberfläche gerastert wird. Die dabei verursachte Auslenkung des Federbalkens wird mit einer geeigneten Meßmethode nachgewiesen.

Die Kraftmikroskopie wird in zwei Betriebsarten angewandt. Bei Messung mit atomarer Empfindlichkeit befindet sich die Spitze in Kontakt mit der Probenoberfläche. Dabei werden die repulsiven Kräfte zwischen der Probe und dem ersten Atom in der Spitze ausgenutzt. Die Auflagekräfte des Federarms liegen im Bereich von $10^{-7}$ bis $10^{-10}$ N. Daraus resultieren Federkonstanten des Federbalkens von 0,01 bis 10 N/m.

Oft sind selbst diese geringen Kräfte noch zu groß und haben deshalb Deformationen der Probenoberfläche zur Folge. In diesen Fällen werden z.B. die anziehenden Van-der-Waals-Kräfte zwischen Probe und Spitze genutzt. Die Spitze befindet sich dazu im Wechselwirkungsbereich dieser Kräfte, doch nicht im Kontakt mit der Probenoberfläche. Zur Messung wird der Federbalken zu Resonanzschwingungen angeregt. Bei einer Änderung des Kraftgradienten zwischen Probe und Spitze ändert sich die effektive Federkonstante des Systems und damit auch die Resonanzfrequenz. Entweder wird diese Frequenzverschiebung gemessen oder bei konstanter Frequenz die dabei verursachte Änderung in der Schwingungsamplitude des Federarms mit Hilfe der Lock-in-Technik nachgewiesen. Mit dieser Meßmethode ist keine atomare Auflösung erreichbar. Die Auflösung wird zudem sehr stark durch die Spitzengeometrie bestimmt, da viele Atome der Spitze zur Wechselwirkung beitragen.

In jeder der beiden Betriebsarten kann bei konstanter Höhe oder bei konstanter Kraft bzw. konstantem Kraftgradienten gemessen werden. Im ersten Fall wird der Abstand zwischen Federarm und Probe konstant gehalten und die Auslenkung des Federarms aufgezeichnet. Im zweiten Fall wird die Kraft bzw. der Kraftgradient zwischen Federarm und Probe durch einen Regelkreis konstant gehalten. Dazu befindet sich z.B. die Probe auf einem piezoelektrischen Verstellglied, mit dem der Abstand zwischen Spitze und Probe eingestellt werden kann.

Es sind mehrere Methoden zur Detektion der Auslenkung des Federbalkens bekannt. Die gängigsten sind optische Detektionsmethoden wie das Lichtzeigerprinzip und das interferometrische Prinzip.

Aus der US-PS 5,017,010 ist die Ausführung eines interferometrischen Kraftmikroskopes bekannt. Der Federbalken wird bis auf wenige Mikrometer vor das Ende einer Glasfaser positioniert, so daß das Licht aus der Faser austreten kann und durch Reflektion am Federarm wieder in die Faser eingekoppelt werden kann. Dieses Licht interferiert mit dem am Glasfaserende in der Faser rückreflektierten Licht, wobei das sinusförmige Interferenzsignal zur Detektion der Auslenkung des Federbalkens benutzt wird. Eine hohe Empfindlichkeit erreicht man an den steilsten Punkten des Interferenzsignals. Die Anordnung hat jedoch den Nachteil, daß dieser optimale Arbeitspunkt mechanisch eingestellt werden muß. Dazu wird ein piezoelektrisches Stellglied benutzt, das den Abstand zwischen Faserende und Mikroskoparm auf den empfindlichen Punkt des Interferenzsignals einstellt. Das System ist daher in der Positionierung sehr aufwendig. Zudem wirken sich Phasenschwankungen des Lichtes in der Glasfaser drastisch auf das Interferenzsignal aus. Aus Stabilitätsgründen wird das Glasfaserende aufgeklebt und kann nicht ohne großen Justieraufwand erneuert werden. Da das System aus verschiedenen Komponenten besteht, besitzt es eine sehr große thermische Drift. Das piezoelektrische Stellglied ist zudem eine zusätzliche Rauschquelle.

Aus der EP 0 44 02 68 A2 sowie der EP 0 29 06 48 ist der Aufbau eines kompakten interferometrischen Kraftmikroskopsensors bekannt, der einen Federbalken aufweist, der über einem Loch angebracht ist. Auf der Unterseite des Lochs wird ein teildurchlässiger Spiegel befestigt. Das Licht gelangt durch den teildurchlässigen Spiegel auf den metallbedampften Mikroskoparm und wird dort reflektiert. Das reflektierte Licht interferiert mit dem am teildurchlässigen Spiegel reflektierten Licht.

Soll das Detektionssystem die für die Kraftmikroskopie nötige hohe Auflösung erreichen, muß ebenfalls am steilsten Punkt des Interferenzsignals gearbeitet werden. Nachteilig ist, daß dieser Punkt des Interferenzsignals justiert werden muß. Das soll durch die elektrostatische Abstoßung des Federbalkens geschehen, indem die auf dem Federbalken befindliche metallische Beschichtung und das Trägerelement als Elektroden genutzt werden.

Ein weiterer Nachteil besteht darin, daß der Spiegel über dem Loch positioniert werden muß, was einen zusätzlichen manuellen Justieraufwand darstellt. Darüber hinaus ist die lange optische Weglänge im Sensor nachteilig, da sie eine große Kohärenzlänge des Lichtes erfordert, so daß die verwendbaren Lichtquellen auf einen Laser beschränkt sind.

Der bisher kompakteste optische Kraftmikroskopsensor besteht aus einem Laserdioden-Feedbacksystem, wie es in der US-PS 5,025,658 beschrieben ist. Ein Laserdiodenausgangssignal bildet dabei mit dem Federbalken ein Fabry-Perot-Interferometer, dessen Interferenzsignal durch die Laserdiode zurück auf einen Photodetektor gelangt. Auch in diesem System wird der empfindlichste Punkt des Interferenzssignals mit einem piezoelektrischen Stellglied eingestellt. Eine atomare Auflösung ist damit nicht erreicht worden, da der Federbalken nicht im Kontakt von Spitze und Probe arbeiten kann.

Aus IBM Technical Disclosure Bulletin, Bd. 32, 1989, S. 416-417 ist ein Kraftmikroskop bekannt, bei dem der Federbalken und der Abstandshalter aus einem Stück gefertigt sind. Dieses Bauteil ist auf einem Glasblock befestigt, der ebenso wie der Kraftarm mit einer Metallschicht versehen ist, um eine elektrostatische Kraft auf den Kraftarm ausüben zu können. Aufgrund der Fertigungstoleranzen eines solchen einstückigen Bauteils ist es nicht möglich, ohne Justierung den gewünschten Abstand zum Trägerelement einzustellen. Hinzu kommt noch, daß das einstückige Bauteil auf dem Glasblock z.B. mittels eines Klebers befestigt werden muß, was ebenfalls zu einem undefinierten Abstand des Federbalkens zur Oberfläche des Glasblockes führt.

Das gleiche gilt auch für die DE 4107605 C I, wonach der Tastarm und die optoelektronische Einrichtung sogar ein gemeinsames Teil bilden und aus einer gemeinsamen Platte gefertigt sind. Hergestellt wird die gesamte Anordnung durch Ätzen. Auch bei diesem Federbalken ist eine Nachjustierung erforderlich.

J.Vac.Scii Technol. A, Bd. 8, 1990, S. 3386-95 beschreibt zwei Federbalken, die auf einem Siliziumelement aufgebracht sind. Durch Ätzen wird der Federbalken freigelegt. Allerdings gibt es bei den beschriebenen Anordnungen kein Trägerelement, das sich über den Bereich der Sensorspitze erstreckt.

Aufgabe der Erfindung ist daher ein Sensorkopf, bei dem eine Justierung des Arbeitspunktes nach dessen Einbau entfällt, der leicht austauschbar ist, und dessen thermische Drift auf ein Minimum reduziert ist. Das Verfahren zur Herstellung solcher Sensorköpfe soll zur Massenfertigung geeignet sein und das Verfahren zum Messen der Auslenkung des Federbalkens eines solchen Sensorkopfes soll sich durch einfachen Aufbau und große Genauigkeit auszeichnen.

Die Erfindung wird durch einen Sensorkopf gemäß Patentanspruch 1 gelöst. Das Verfahren ist Gegenstand der Patentansprüche 12 und 14 und das Verfahren zum Messen der Auslenkung eines Federbalkens eines erfindungsgemäßen Sensorkopfes ist Gegenstand des Patentanspruchs 21.

Der erfindungsgemäße Sensorkopf wird vornehmlich in der Kraftmikroskopie eingesetzt. In diesem Fall trägt der Federbalken an seinem freien Ende ein Sensorelement, z.B. eine Sensorspitze. Der Einsatz des Sensorkopfes ist jedoch nicht auf die Kraftmikroskopie beschränkt, sondern er kann z.B. als Beschleunigungssensor verwendet werden.

Der Federbalken stellt ebenso wie das Trägerelement ein eigenständiges Bauteil des Sensorkopfes dar und ist über mindestens einen Abstandshalter aus einer Schicht definierter Dicke mit dem Trägerelement verbunden. Die Justierung des Abstandes von Federbalken zum Trägerelement erfolgt somit bei der Herstellung des Sensorkopfes durch Festlegung der Dicke der als Abstandshalter dienenden Schicht. Es ist somit nach dem Einbau des Sensorkopfes z.B. in ein Kraftmikroskop keine mechanische Einstellung des optimalen Arbeitspunktes für das Interferenzsignal mehr erforderlich. Da die Dicke der Schicht und somit der Abstand mit großer Genauigkeit eingestellt werden kann, entfallen weitere Justiereinrichtungen, wie z.B. Piezoelemente.

Der Federbalken ist derart ausgebildet, daß die Dicke der Schicht gleich dem Abstand des Federbalkens zwischen seinem freien Ende und dem Trägerelement ist. Die Dicke der Schicht und somit der Abstand des Federbalkens kann so weit reduziert werden, daß der Federbalken gerade noch nicht durch die anziehenden Van-der-Waals-Kräfte an den Träger gezogen wird. Die feste Einstellung des Abstandes von Federbalken zum Trägerelement bis auf wenige hundert Nanometer konnte bisher noch nicht erreicht werden und eröffnet hinsichtlich des Meßverfahrens zum Messen der Auslenkung des Federbalkens neue Möglichkeiten, so z.B. die Anregung von Oberflächenplasmonen in plasmonaktiven Schichten, was nachfolgend noch beschrieben wird.

Ein weiterer Vorteil des Sensorkopfes besteht darin, daß er auf einfache Weise insgesamt ausgetauscht werden kann, ohne daß beim Einsetzen eines neuen Sensorkopfes eine Justierung erforderlich ist. Auch hat sich herausgetellt, daß die thermische Drift des Sensorkopfes deutlich geringer ist, als bei den bekannten Sensorköpfen.

Die als Abstandshalter dienende Schicht definierter Dicke ist vorzugsweise eine Opferschicht, die vorteilhafterweise aus Nickel, Titan oder Titanoxid besteht. Opferschichten haben den Vorteil, daß die Herstellung des Sensorkopfes auf einfache Weise möglich ist, da zur Schaffung des notwendigen Freiraumes zwischen dem Federbalken und dem Trägerelement die Opferschicht herausgeätzt werden kann, wobei der Federbalken sowohl an einem als auch an beiden Enden mit dem Trägerelement verbunden sein kann.

Vorzugsweise tragen die sich gegenüberliegenden Flächen des Trägerelementes und des Federbalkens jeweils eine Spiegelschicht, wobei das Trägerelement aus transparentem Material, beispielsweise Glas, besteht. Damit auch bei dieser Ausführungsform der Abstand zwischen Federbalken und Trägerelement durch den oder die Abstandshalter definiert ist, sind die Spiegelschichten auch zwischen Federbalken und Abstandshalter bzw. Abstandshalter und Trägerelement vorhanden.

Um eine interferometrische Auswertung der Auslenkung des Federbalkens zu ermöglichen, ist die auf dem Trägerelement befindliche Spiegelschicht teildurchlässig. Je nach Ausbildung der Spiegelschichten kann das System Federbalken-Trägerelement als Fabry-Perot-Interferometer betrieben werden, wobei die elektromagnetische Strahlung von der Rückseite des vorzugsweise transparenten Trägerelementes in den Sensorkopf eingestrahlt wird. Dadurch, daß die beiden Spiegelflächen dichter beieinander liegen, als dies bei bekannten Sensorköpfen der Fall ist, kann die Kohärenzlänge der elektromagnetischen Strahlung geringer sein, so daß man nicht auf den Einsatz von Laserlicht beschränkt ist.

Die Dicke der Opferschicht und damit der Abstand zwischen den beiden Spiegelschichten beträgt vorzugsweise ein ungeradzahliges Vielfaches von $\lambda/4$, wobei $\lambda$ die Wellenlänge der in den Sensorkopf eingestrahlten elektromagnetischen Strahlung bezeichnet. Durch die Einstellung eines Vielfaches von $\lambda/4$ liegt der Arbeitspunkt des Interferometers im empfindlichsten Punkt der Leistungskurve.

Die Einstellung von Abständen zwischen Federbalken und Trägerelement im Nanometerbereich eröffnet die Möglichkeit, die Anregung von Oberflächenplasmonen für die Ermittlung der Auslenkung des Federbalkens auszunutzen. Zu diesem Zweck sind die Spiegelschichten durch plasmonaktive Schichten ersetzt. Hierbei reicht es aus, wenn lediglich eine plasmonaktive Schicht entweder auf dem Federbalken oder dem Trägerelement vorgesehen ist. Das Vorsehen zweier plasmonaktiver Schichten auf den gegenüberliegenden Seiten von Federbalken und Trägerelement ermöglicht eine weitere Erhöhung der Meßgenauigkeit bezüglich der Auslenkung des Federbalkens. Damit Oberflächenplasmonen in diesen plasmonaktiven Schichten angeregt werden können, muß ein Abstand von ca. 500 bis 800 nm eingehalten werden, was durch das Vorsehen einer entsprechend dünnen Schicht als Abstandshalter in diesem Bereich möglich ist. Der genaue Abstand richtet sich nach der verwendeten Wellenlänge und den optischen Eigenschaften der plasmonaktiven Schichten und der anderen Materialien des Schichtsystems.

Zur Anregung von Oberflächenplasmonen ist es erforderlich, daß parallel polarisiertes monochromatisches Licht unter einem Winkel größer dem Winkel der Totalreflektion in das Trägerelement eingestrahlt wird, so daß sich in der Grenzfläche des Trägerelementes, die dem Federbalken zugewandt ist, ein evaneszentes Feld ausbildet, das die Oberflächenplasmonen in den plasmonaktiven Schichten anregt. Um die Einstrahlung im Winkelbereich der Totalreflektion zu ermöglichen, ist an der Rückseite des Trägerelementes ein Prisma angeordnet oder das Trägerelement selbst ist als Prisma ausgebildet, wobei eine Seitenfläche des Prismas dem Federbalken zugewandt ist.

Der genaue Arbeitspunkt wird über den Einfallswinkel auf maximale Steigung des Meßsignals eingestellt.

Gemäß einer anderen Ausführungsform ist es auch möglich, daß das Trägerelement auf seiner Ober- oder Unterseite ein Beugungsgitter trägt, das photolithographisch erzeugt werden kann. Auch hier muß die Gitterkonstante so gewählt werden, daß für die gegebene Wellenlänge und die optischen Konstanten des Schichtsystems des Sensorkopfes die Koppelbedingung für die Anregung von Oberflächenplasmonen erfüllt ist.

Der Nachweis der Auslenkung des Federbalkens erfolgt hierbei durch Messung der Intensität des reflektierten Lichtes. Die Plasmonanregung macht sich durch ein scharfes resonanzartiges Minimum der reflektierten Intensität bemerkbar. Ein durch die Auslenkung des Federbalkens hervorgerufene Änderung des Luftspaltes, d.h. des Abstandes zwischen Federbalken und Trägerelement, wirkt sich deshalbdrastisch auf die Anregungsbedingung des Plasmons aus und verändert daher die reflektierte Intensität.

Als plasmonaktive Schichten werden vorzugsweise solche aus Gold, Aluminium oder Silber eingesetzt.

Das Herstellungsverfahren des Sensorkopfes beruht auf der Ausbildung eines Schichtensystems, wobei eine Schicht eine Opferschicht darstellt.

Gemäß einer ersten Ausführungsform wird das Schichtensystem auf die Rückseite des Federbalkens aufgebracht und anschließend das Trägerelement mit dem Schichtensystem verbunden. Danach wird die Opferschicht bis auf mindestens einen Abstandshalter am Ende des Federbalkens durch Ätzen entfernt.

Zur Herstellung des Sensorkopfes kann zunächst nach einem bekannten Verfahren der Federbalken, gegebenenfalls mit einer integrierten Sensorspitze hergestellt werden, wie dies z.B. in J. Vac. Sci. Technol. A8(4) 1990, 3386 beschrieben wird. Dabei wird durch anisotropes Ätzen ein ca. 2 bis 3 $\mu$m tiefes Loch in einen Silizium(100)-Wafer

erzeugt. Auf dem Silizium-Wafer wird anschließend beispielsweise eine Siliziumoxinitridschicht mit einer Dicke von etwa 600 nm durch reaktives Sputtern aufgebracht. Diese Schicht füllt das Loch auf und bildet gleichzeitig den Federbalken.

Aufbauend auf diesem System erfolgt dann die Fertigung des übrigen Sensorkopfes, wobei der Silizium-Wafer erst vor dem Ätzen der Opferschicht entfernt wird. Mit Hilfe einer Maske wird hierbei die Form des Federbalkens, gegebenenfalls mit integrierter Spitze, aus der Siliziumoxinitridschicht geätzt.

Weitere Materialien für den Federbalken können Siliziumnitrid oder Siliziumcarbid sein.

Gemäß einer anderen Ausführungsform wird das Schichtensystem auf das Trägerelement aufgebracht, wobei ebenfalls eine Schicht eine Opferschicht ist. Auf das Schichtensystem wird anschließend eine Schicht, wie Siliziumnitrid, SiC oder $SiO_2$ aufgebracht.

Die Opferschicht wird ebenfalls bis auf mindestens einen Abstandshalter an einem oder beiden Enden des Federbalkens durch Ätzen entfernt.

Das Aufbringen einer Sensorspitze auf den Federbalken vor Entfernung der Opferschicht kann z.B. nach dem in J. Vac. Sic. Technol. A8(4) 1990, 3386 beschriebenen Verfahren erfolgen. Es wird einZweischichtsystem hergestellt, wobei die obere Schicht aus einer Titan-Wolfram-Verbindung besteht, die an der für die Spitze vorgesehenen Stelle ein Loch (typischerweise 3 $\mu$m Durchmesser) aufweist. Durch dieses Loch wird die untere z.B. aus Kupfer bestehende Schicht bis zur siliziumhaltigen Schicht geätzt. Anschließend wird eine Metallschicht aufgedampft, so daß durch die Lochmaske der oberen Schicht auf der siliziumhaltigen Schicht eine Spitze entsteht. Danach wird das Zweischichtsystem entfernt. Der Federbalken wird durch Ätzen freigelegt, wobei zum Schutz der Spitze diese durch einen Photolack abgedeckt werden kann.

Das jeweils aufgebrachte Schichtensystem weist neben der Opferschicht mindestens eine Spiegel- und/oder plasmonaktive Schicht auf, je nachdem welcher der zuvor beschriebenen Sensorköpfe hergestellt werden soll. Das Schichtensystem wird vorzugsweise aufgedampft oder gesputtert, wobei die Spiegelschicht oder die plasmonaktive Schichtvorzugsweise in der Lift-Off-Technik aufgebracht wird.

Um die Haftung der Spiegelschicht oder der plasmonaktiven Schicht zu verbessern, wird vor dem Aufbringen der jeweiligen Schicht vorzugsweise eine Haftvermittlerschicht aus Chrom aufgebracht.

Die Dicke der Opferschicht, die für den späteren Abstand von Federbalken und Trägerelement verantwortlich ist, erfolgt durch Monitorieren während des Aufbringens der Opferschicht. Dadurch kann die Dicke der Opferschicht während des Aufbringens bis auf ± 5 nm genau eingestellt werden.

Damit der Streß der einzelnen Schichten ausgeglichen wird, wird auch auf der Unterseite des Federbalkens unter Nutzung der Lift-Off-Technik eine identische Beschichtung aufgebracht, die je nach Art des Sensorkopfes eine Spiegelschicht oder eine plasmonaktive Schicht ggf. mit einer Haftvermittlerschicht sein kann.

Beispielhafte Ausführungsformen werden nachfolgend anhand der Zeichnungen näher erläutert.

Es zeigen:

Figur 1
ein Schichtensystem für einen Sensorkopf,

Figur 2
einen Sensorkopf in Seitenansicht,

Figur 3

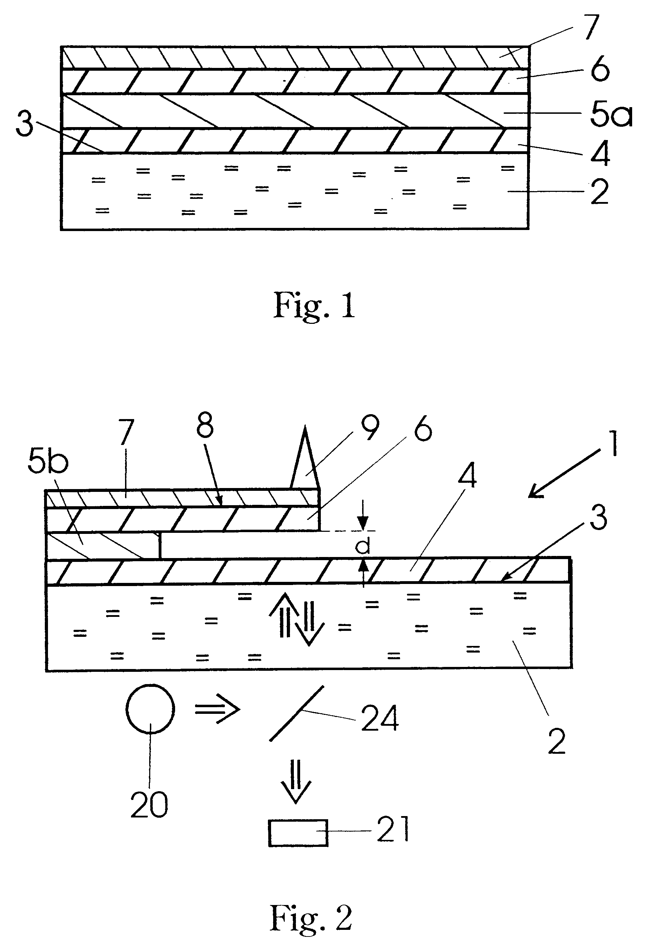

den in Figur 2 gezeigten Sensorkopf in perspektivischer Darstellung,

Figur 4
eine Leistungskurve in Abhängigkeit vom Abstand d zwischen den Spiegelschichten eines interferometrischen Sensorkopfes,

Figur 5, 6 und 7
Sensorköpfe in verschiedenen Ausführungsformen mit plasmonaktiven Schichten und

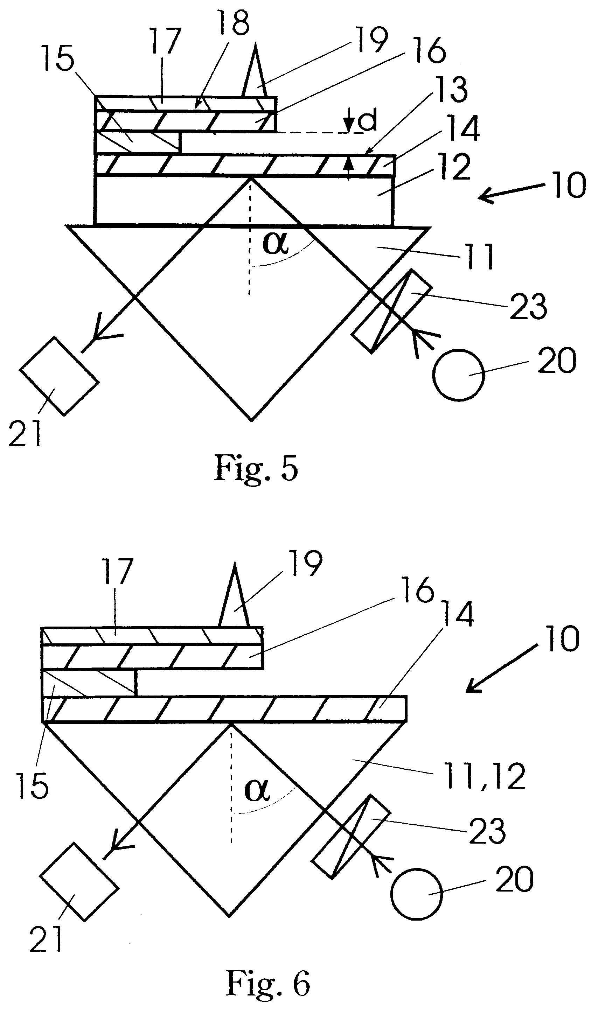

Figur 8
die Reflektivität in Abhängigkeit des Einfallswinkels $\alpha$ bei einem der in Figuren 5 bis 7 gezeigten Sensorköpfe.

In der Figur 1 ist ein Schichtensystem schematisch dargestellt, das für die Herstellung eines Sensorkopfes 1 geeignet ist. Auf einem Trägerelement 2 ist auf der Oberseite 3 eine Spiegelschicht 4 aufgebracht, an die sich eine Opferschicht 5a und eine weitere Spiegelschicht 6 anschließt. Auf der Spiegelschicht 6 befindet sich eine weitere Schicht, die den späteren Federbalken 7 bildet. Die Opferschicht 5a wird durch Ätzen zwischen den Spiegelschichten 4 und 6 so weit entfernt, daß ein Abstandhalter 5b verbleibt, wie dies in der Figur 2 dargestellt ist. Die Dicke der Opferschicht 5a und damit die Dicke des Abstandshalters 5b definiert den Abstand d zwischen dem Federbalken 7 und dem Trägerelement 2. Da das Trägerelement 2 und der Federbalken 7 jeweils mit einer Spiegelschicht 4 und 6 versehen sind, die sich auch über den Abstandshalter 5b erstrecken, wird der Abstand von Federbalken zu Trägerelement durch diese Spiegelschichten nicht beeinflußt. Am freien Ende des Federbalkens 7 ist eine Sensorspitze 9 aufgebracht, wenn der Sensorkopf 1 in einem Kraftmikroskop eingesetzt werden soll.

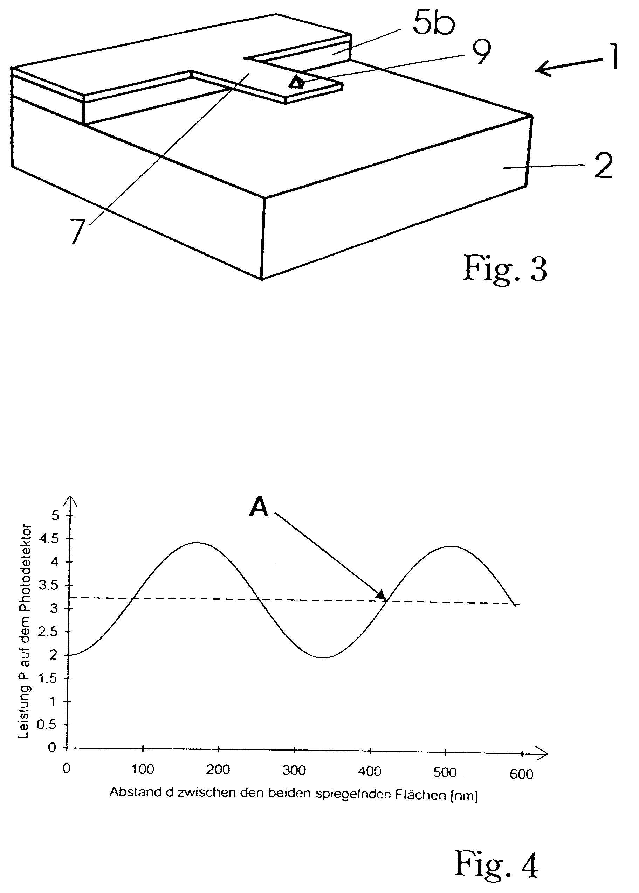

In der Figur 3 ist die perspektivische Darstellung des in Figur 2 gezeigten Sensorkopfes 1 zu sehen. Der Federbalken 7 erstreckt sich über den mittleren Bereich des Trägerelements 2.

Das Trägerelement 2 besteht aus transparentem Material und die Spiegelschicht 4 ist teildurchlässig, so daß der in Figur 2 gezeigte Sensorkopf 1 als interferometrischer Sensorkopf eingesetzt werden kann. Das durch Pfeile gekennzeichnete, von einer Lichtquelle 20 über einen Strahlteiler 24 eingestrahlte Licht wird sowohl an der Spiegelschicht 4 als auch an der Spiegelschicht 6 reflektiert, so daß es zur Interferenz kommt. Das reflektierte Licht wird von einem Detektor 21 gemessen.

Die Leistung P (d) in Abhängigkeit vom Abstand d zwischen den beiden Spiegelschichten 4 und 6 ist in der Figur 4 dargestellt. Die sinusförmige Kurve wird durch nachfolgende Formel beschrieben:

$$P(d) = P_{Untergrund} + F.P_o . \sin^2(2\pi d/\lambda + \phi)$$

mit

$$F = \frac{4 \cdot R}{(1- R)^2}$$

R $= r.r'$

r $=$ Reflektivität des ersten Spiegels

r' $=$ Reflektivität des zweiten Spiegels

P(d) $=$ Leistung auf dem Photodetektor 21

$P_{Untergrund}$ $=$ Untergrundleistung (Rauschen etc.)

d $=$ Abstand zwischen den beiden Spiegeln

$=$ Wellenlänge

F $=$ Finess des Interferometers

$\phi$ $=$ Phasenverschiebung, materialabhängig

Die Dicke des Abstandshalters 5b wird vorteilhafterweise so eingestellt, daß der Arbeitspunkt A im steilsten Punkt der Leistungskurve liegt. Die in Figur 4 gezeigte Leistungskurve gilt für r = 0,3, r' = 1 und eine Wellenlänge $\lambda$ = 670 nm und eine Phasenverschiebung $\phi$ = 0. Der Arbeitspunkt A kann duch die Dicke der Opferschicht auf ± 5 nm genau eingestellt werden.

In der Figur 5 ist ein Sensorkopf 10 dargestellt, der zur Detektion der Balkenauslenkung über die Anregung von Oberflächenplasmonen geeignet ist. Er weist ein Trägerelement 12, einen Abstandshalter 15 und einen Federbalken 17 mit einer Sensorspitze 19 auf. Anstelle der Spiegelschichten des Sensorkopfs 1 sind plasmonaktive Schichten 14 und 16 auf der Oberseite 13 des Trägerelementes 2 bzw. der Unterseite 18 des Federbalkens 17 vorgesehen, die sich wie bei der in Figur 1 gezeigten Ausführungsform ebenfalls über den Abstandshalter 15 erstrecken, so daß die Dicke des Abstandshalters 15 den Abstand von Federbalken 17 und Trägerelement 12 definiert.

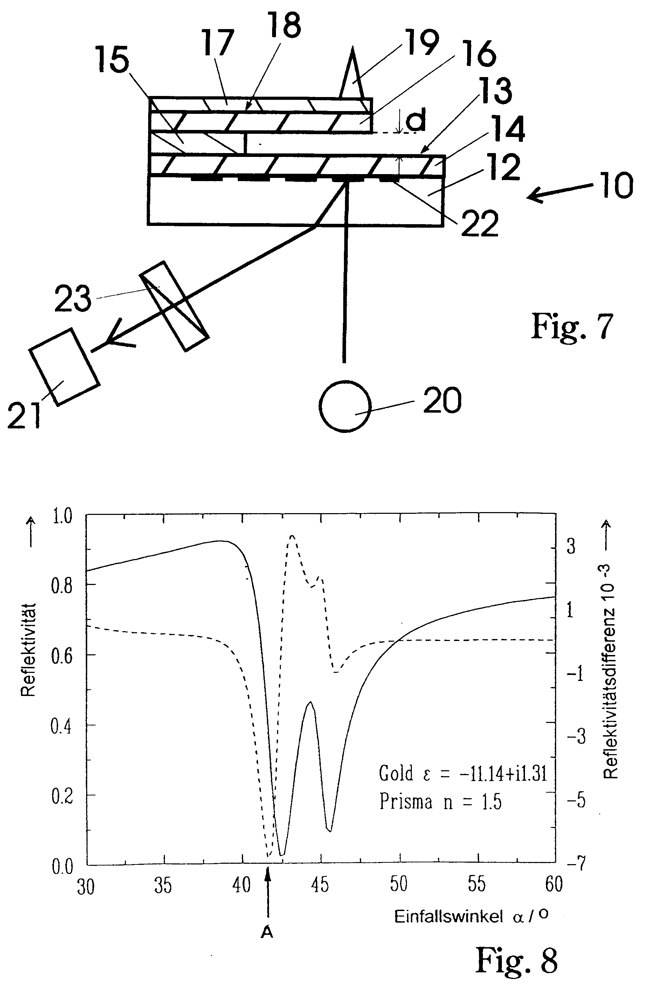

An der Unterseite des Trägerelementes 12 ist ein dreieckförmiges Prisma 11 angeordnet, so daß das von einer Strahlungsquelle 20 eingestrahlte Licht an der Grenzfläche Trägerelement 12/plasmonaktive Schicht 14 total reflektiert wird und von einem Detektor 21 erfaßt werden kann. An der Grenzfläche Trägerelement 12/plasmonaktive Schicht 14 wird ein evaneszentes Feld erzeugt, das sowohl in der plasmonaktiven Schicht 14 als auch in der plasmonaktiven Schicht 16 Oberflächenplasmonen anregt. Diese Anregungen zeigen sich als zwei Minima in der Reflektivität für monochromatisches, parallel polarisiertes Licht als Funktion des Winkels $\alpha$ , wie dies in der Fig. 8 dargestellt ist (durchgezogene Kurve). Diese Kurve wurde für eine Dicke der halbdurchlässigen Schicht von 35 nm und eine Dicke des Luftspalts zwischen den Spiegeln von 700 nm sowie eine Wellenlänge von 670 nm berechnet. In der Figur sind außerdem die verwendeten optischen Konstanten des Prismas und der Goldschichten angegeben. Eine Auslenkung des Balkens macht sich in der Änderung des Luftspaltes bemerkbar. Um diesen Fall zu simulieren, wurdeaußerdem die Reflektivität mit einem 1 nm größeren Luftspalt berechnet. Die Differenz beider Kurven ist ebenfalls in Fig. 8 gestrichelt dargestellt. Die Differenzkurve macht eine Ausage über den optimalen Arbeitspunkt (A), der über den Winkel einzustellen ist. Er liegt im berechneten Fall bei 43°. Für diesen Winkel reagiert die Anordnung mit einer Reflektivitätsänderung von ca. 1%/nm. Die Messung erfolgt dadurch, daß unter diesem optimalen Winkel mit parallel polarisiertem Licht auf die Basisfläche des Prismas eingestrahlt wird. Die Polarisation wird durch einen zusätzlichen im Strahlengang befindlichen Polarisator 23 erzeugt. Im reflektierten Licht befindet sich ein Detektor 21, dessen Signaländerung ein Maß für die durch die Balkenauslenkung hervorgerufene Abstandsänderung des Luftspalts ist.

Wie in der Figur 6 dargestellt ist, kann auf das Trägerelement 12 in der in Figur 5 gezeigten Ausführungsform verzichtet werden, wenn das Trägerelement 12 als Prisma 11 ausgebildet ist. In diesem Fall ist die plasmonaktive Schicht 14 direkt auf einer Seitenfläche des Prismas 11 aufgebracht.

In der Figur 7 ist eine weitere Ausführungsform des Sensorkopfes 10 dargestellt, wobei anstelle eines Prismas 11 ein Beugungsgitter 22 auf der Oberseite 13 des Trägerelementes 12 aufgebracht ist. Die Gitterkonstante wird so gewählt, daß das eingestrahlte monochromatische Licht in einer Beugungsordnung die Koppelbedingung für Oberfächenplasmonen erfüllt und dabei gleichzeitig optimal auf eine Änderung des Luftspaltes zwischen den Spiegeln reagiert. Im reflektierten Licht der betreffenden Beugungsordnung ist ein Polarisator 23 derart angeordnet, daß nur parallel polarisiertes Licht auf den Detektor 21 gelangt.

Eine Balkenauslenkung wirkt sich über die Änderung des Luftspalts in einer Signaländerung am Detektor 21 aus, weil dadurch die Kopplung an die Oberflächenplasmonanregung modifiziert wird.

Bezugszeichen:

1 Sensorkopf
2 Trägerelement
3 Oberseite Trägerelement
4 Spiegelschicht
5 Abstandshalter
6 Spiegelschicht
7 Federbalken
8 Unterseite Federbalken
9 Sensorspitze
10 Sensorkopf
11 Prisma
12 Trägerelement
13 Oberseite Trägerelement
14 plasmonaktive Schicht
15 Abstandshalter
16 plasmonaktive Schicht
17 Federbalken
18 Unterseite Federbalken
19 Sensorspitze
20 Strahlungsquelle
21 Detektor
22 Beugungsgitter
23 Polarisator
24 Strahlteiler

**Patentansprüche**

1. Sensorkopf, insbesondere für die Kraftmikroskopie, mit einem Trägerelement und einen am Trägerelement befestigten Federbalken, der sich beabstandet über das Trägerelement erstreckt, dadurch gekennzeichnet, daß der Federbalken (7, 17) über mindestens einen Abstandshalter (5b, 15) aus einer Schicht (5a) definierter Dicke mit dem Trägerelement (2, 12) verbunden ist.

2. Sensorkopf nach Anspruch 1, dadurch gekennzeichnet, daß die Schicht (5a) eine Opferschicht ist.

3. Sensorkopf nach Anspruch 2, dadurch gekennzeichnet, daß die Schicht (5a) aus Nickel, Titan oder Titanoxid besteht.

4. Sensorkopf nach einem der Ansprüche 1 bis 3, dadurch gekennzeichnet, daß die sich gegenüberliegenden Flächen des Trägerelementes (2) und des Federbalkens (7) jeweils eine Spiegelschicht (4, 6) tragen und daß das Trägerelement (2) transparent ist.

5. Sensorkopf nach einem der Ansprüche 1 bis 4, dadurch gekennzeichnet, daß die auf dem Trägerelement (2) befindliche Spiegelschicht (4) teildurchlässig ist.

6. Sensorkopf nach einem der Ansprüche 1 bis 5, dadurch gekennzeichnet, daß die Dicke d der Opferschicht (5a) ein ungeradzahliges Vielfaches von $\lambda/4 + \phi$ ist, wobei $\lambda$ die Wellenlänge einer in den Sensorkopf (1) eingestrahlten elektromagnetischen Strahlung und $\phi$ eine materialabhängige feste Phasenverschiebung ist.

7. Sensorkopf nach Anspruch 1, dadurch gekennzeichnet, daß an der Rückseite des Trägerelementes (12) ein Prisma (11) angeordnet ist.

8. Sensorkopf nach Anspruch 1, dadurch gekennzeichnet, daß das Trägerelement (12) als Prisma (11) ausgebildet ist, dessen eine Seitenfläche dem Federbalken (17) zugewandt ist.

9. Sensorkopf nach Anspruch 1, dadurch gekennzeichnet, daß das Trägerelement (12) auf seiner Ober- oder Unterseite ein Beugungsgitter (22) trägt.

10. Sensorkopf nach einem der Ansprüche 7 bis 9, dadurch gekennzeichnet, daß mindestens eine plasmonaktive Schicht auf dem Trägerelement (12) oder dem Federbalken (17) vorgesehen ist.

11. Sensorkopf nach einem der Ansprüche 7 bis 10, dadurch gekennzeichnet, daß der Abstand d zwischen Trägerelement (12) und Federbalken (17) zur Anregung von Oberflächenplasmonen in mindestens einer plasmonaktiven Schicht (14, 16) eingestellt ist.

12. Verfahren zur Herstellung eines Sensorkopfes nach Anspruch 1 oder 2, bei dem mindestens der Federbalken vorgefertigt und der Federbalken mit dem Trägerelement verbunden wird, dadurch gekennzeichnet, daß auf die Rückseite des Federbalkens ein Schichtensystem aufgebracht wird, wovon eine Schicht eine Opferschicht ist, daß das Trägerelement mit dem Schichtensystem verbunden wird und daß bis auf mindestens einen Abstandshalter die Opferschicht unter dem Federbalken durch Ätzen entfernt wird.

13. Verfahren nach Anspruch 12, dadurch gekennzeichnet, daß der Federbalken auf einem Silizium-Wafer hergestellt wird, der erst vor dem Ätzen der Opferschicht entfernt wird.

14. Verfahren zur Herstellung eines Sensorkopfes nach Anspruch 1 oder 2, dadurch gekennzeichnet,
daß auf ein Trägerelement ein Schichtensystem aufgebracht wird, wovon eine Schicht eine Opferschicht ist,
daß auf das Schichtensystem eine siliziumhaltige Schicht als Federbalken aufgebracht wird, und
daß dann bis auf mindestens einen Abstandshalter die Opferschicht unter dem Federbalken durch Ätzen entfernt wird.

15. Verfahren nach einem der Ansprüche 12 bis 14, dadurch gekennzeichnet, daß mindestens eine Spiegel- und/oder plasmonaktive Schicht als Bestandteil des Schichtensystems aufgebracht wird.

16. Verfahren nach einem der Ansprüche 12 bis 15, dadurch gekennzeichnet, daß die Schichten des Schichtensystem aufgedampft oder gesputtert werden.

17. Verfahren nach einem der Ansprüche 15 oder 16, dadurch gekennzeichnet, daß die Spiegelschicht oder die plasmonaktive Schicht in Lift-Off-Technik aufgebracht wird.

18. Verfahren nach einem der Ansprüche 12 bis 17, dadurch gekennzeichnet, daß vor dem Aufbringen der Spiegelschicht oder der plasmonaktiven Schicht eine Haftvermittlerschicht aus Chrom aufgebracht wird.

19. Verfahren nach einem der Ansprüche 12 bis 18, dadurch gekennzeichnet, daß auf die Unterseite des Federbalkens eine der Spiegelschicht oder der plasmonaktiven Schicht entsprechende Beschichtung aufgebracht wird.

20. Verfahren nach einem der Ansprüche 12 bis 19, dadurch gekennzeichnet, daß die Dicke der Opferschicht durch Monitorieren beim Aufbringen eingestellt wird.

21. Verfahren zum Messen der Auslenkung eines Federbalkens eines Sensorkopfes gemäß einem der Ansprüche 7 bis 11, dadurch gekennzeichnet, daß in das Trägerelement elektromagnetische Strahlung unter einem solchen Winkel $\alpha$ zur, dem Federbalken gegenüberliegenden Grenzfläche des Trägerelementes eingestrahlt wird, daß durch das in der Grenzfläche entstehende evaneszente Feld Oberflächenplasmonen in der mindestens einen plasmonaktiven Schicht angeregt werden, und
daß die Abstandsänderung Federbalken/Trägerelement aus der Intensität der an der Grenzfläche reflektierten Strahlung ermittelt wird.

Fig. 1

Fig. 2

Fig. 3

Abstand d zwischen den beiden spiegelnden Flächen [nm]

Fig. 4

Fig. 5

Fig. 6

Fig. 7

Gold ε = −11.14+i1.31
Prisma n = 1.5

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | WO-A-90 15986 (THE BOARD OF TRUSTEES OF THE LELAND STANFORD JUNIOR UNIVERSITY) | 1 | G01B1/00 G01B7/34 |
| Y | * Seite 2, Zeile 23 - Seite 3, Zeile 23 * | 2-5,7,8, 10, 12-16, 19,20 | G01N27/00 |
| | * Seite 5, Zeile 33 - Seite 9, Zeile 30; Ansprüche 1-6,17; Abbildungen 2,4 * | | |
| | --- | | |
| Y | WO-A-89 07258 (THE BOARD OF TRUSTEES OF THE LELAND STANFORD JUNIOR UNIVERSITY) | 2,3, 12-14, 16,19,20 | |
| A | * Seite 4, Zeile 5 - Seite 6, Zeile 6 * * Seite 12, Zeile 25 - Seite 24, Zeile 4; Ansprüche 16,21,24-27; Abbildungen 3-11 * | 17 | |
| | --- | | |
| Y | IBM TECHNICAL DISCLOSURE BULLETIN., Bd.32, Nr.3A, August 1989, NEW YORK US Seiten 241 - 242 'OPTICAL ATOMIC FORCE SENSOR' | 4,5,19 | |
| | --- | | RECHERCHIERTE SACHGEBIETE (Int.Cl.5) |
| Y | JOURNAL OF APPLIED PHYSICS., Bd.72, Nr.11, 1. Dezember 1992, NEW YORK US Seiten 5027 - 5031 M.RÜCKER ET AL 'SURFACE-PLASMON -INDUCED CONTRAST IN SCANNING TUNNELING MICROSCOPY' | 7,8,10, 15 | G01B G01N |
| A | --- | 11,21 | |
| D,A | DE-C-41 07 605 (HOMMELWERKE GMBH) * das ganze Dokument * | 1,12,14 | |
| | --- | | |
| A | EP-A-0 509 716 (CANON KABUSHIKI KAISHA) * das ganze Dokument * | 1,12,14 | |
| | --- | | |
| D,A | EP-A-0 290 648 (IBM CORPORATION) * das ganze Dokument * | 1,12,14 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 28. Juli 1994 | Brock, T |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | US-A-5 025 658 (V.B.ELINGS ET AL) <br> * das ganze Dokument * <br> --- | 1,12,14 | |
| D,A | IBM TECHNICAL DISCLOSURE BULLETIN., Bd.32, Nr.2, Juli 1989, NEW YORK US <br> Seiten 416 - 417 <br> 'COMPACT INTERFEROMETRIC ATOMIC FORCE SENSOR' <br> ----- | 1,12,14 | |

RECHERCHIERTE SACHGEBIETE (Int.Cl.5)

Der vorliegende Recherchenbericht wurde für alle Patentansprüche erstellt

| Recherchenort | Abschlußdatum der Recherche | Prüfer |
|---|---|---|
| DEN HAAG | 28. Juli 1994 | Brock, T |

EPO FORM 1503 03.82 (P04C03)